Europäisches Patentamt

European Patent Office

Office européen des brevets

(11) Numéro de publication: **0 028 971**
**B1**

(12) **FASCICULE DE BREVET EUROPEEN**

(45) Date de publication du fascicule du brevet:
23.03.83

(21) Numéro de dépôt: **80401564.2**

(22) Date de dépôt: **03.11.80**

(51) Int. Cl.³: **G 01 D 5/22,** G 01 D 5/20

(54) **Capteur de déplacement linéaire.**

(30) Priorité: **05.11.79 FR 7927620**

(43) Date de publication de la demande:
**20.05.81 Bulletin 81/20**

(45) Mention de la délivrance du brevet:
**23.03.83 Bulletin 83/12**

(84) Etats contractants désignés:
**DE FR GB**

(56) Documents cités:
**US-A-2 985 854**
**US-A-3 017 590**
**US-A-3 054 976**
**US-A-3 181 055**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Dron, Sylvain Maurice, 20, avenue Hector Berlioz, F-78530 Buc (FR)**

(74) Mandataire: **Moinat, François et al, S.N.E.C.M.A. Service des Brevets Boîte Postale 81, F-91003 Evry Cedex (FR)**

BUNDESDRUCKEREI BERLIN

Capteur de déplacement linéaire

La présente invention concerne un capteur de déplacemant linéaire.

On connaît déjà un capteur de déplacement linéaire comprenant un transformateur différentiel présentant un enroulement primaire et deux enroulements secondaires. Les deux enroulements secondaires reliés en série et en opposition, sont couplés électromagnétiquement avec l'enroulement primaire. Un noyau de couplage se déplace, dans les deux sens, entre les enroulements primaire et secondaire de manière à faire varier les tensions de façon continue aux bornes des enroulements secondaires du transformateur.

Le document de brevet US-A-3 054 976 décrit un capteur de ce type, qui correspond au capteur de préambule de la revendication 1.

Dans ce type de capteur connu, les deux enroulements secondaires sont reliés en série et en opposition, et lorsque ces deux enroulements sont identiques, la tension s'annule lorsque le noyau de couplage est placé de façon symétrique par rapport aux enroulements secondaires. Lorsque le noyau se déplace, dans un sens ou dans l'autre, l'amplitude de la tension augmente linéairement, mais la phase aux bornes des secondaires est décalée d'un angle de 180° suivant le sens de déplacement du noyau. Dans certains cas de mesures, on fait abstraction de ce déphasage en ne s'intéressant qu'à la variation d'amplitude de la tension en fonction du déplacement do noyau. L'introduction d'un enroulement secondaire supplémentaire, que l'on place entre les deux enroulements précédents permet de décaler, selon la longueur de cet enroulement supplémentaire, l'emplacement du noyau pour lequel la tension aux bornes des secondaires s'annule. Ceci revient à ajouter, par rapport au cas précédent, une tension constante proportionnelle à la tension du primaire.

Dans le capteur décrit précédemment, l'amplitude de la tension aux bornes des enroulements secondaires dépend de la tension délivrée par le primaire. Lorsque cette tension varie autour d'une position donnée, il s'ensuit des fluctuations d'amplitude de la tension fournie par les secondaires.

L'invention a pour but de remédier à ces inconvénients et notamment de s'affranchir de toute fluctuation de la tension primaire entraînant des fluctuations de la tension du secondaire.

L'invention a pour objet un capteur de déplacement linéaire selon le préambule de la revendication 1 et notamment du type de ceux décrits précédemment se caractérisant en ce que, dans le but de s'affranchir de toute fluctuation de tension primaire, chaque enroulement secondaire est constitué de deux bobinages réalisés au moyen de deux fils bobinés simultanément, l'un au moins de ces deux bobinages étant relié en série à un troisième enroulement. Ce troisième enroulement constitue le secondaire d'un transformateur additionnel dont le primaire est relié en série au primaire du transformateur différentiel.

Suivant un mode de réalisation préféré, les deux bobinages sont reliés en série au troisième enroulement qui comporte lui-même deux bobinages constitués de deux fils bobinés simultanément. L'un des bobinages de l'enroulement secondaire du transformateur additionnel est alors relié en phase à l'un des fils du secondaire du transformateur différentiel, et l'autre bobinage de l'enroulement secondaire du transformateur additionnel est relié en opposition de phase à l'autre fil du secondaire du transformateur différentiel de façon à ajouter, dans un cas, une tension aux bornes d'un des bobinages des secondaires du transformateur différentiel et de retrancher, dans l'autre cas, une tension aux bornes de l'autre bobinage des secondaires du transformateur différentiel.

Selon une autre caractéristique de l'invention, la tension ajoutée aux bornes d'un des bobinages des secondaires du transformateur différentiel est égale ou non à celle retranchée aux bornes de l'autre bobinage des secondaires du transformateur différentiel.

Selon un autre mode de réalisation, un seul des deux bobinages des enroulements secondaires du transformateur différentiel est relié en série avec le secondaire du transformateur additionnel et la tension ajoutée à ce bobinage par le secondaire du transformateur additionnel est alors égale au double de la tension maximale aux bornes de l'autre bobinage des enroulements secondaires du transformateur différentiel.

D'autres caractéristiques et avantages de l'invention ressortiront mieux à l'aide de la description qui va suivre, donnée à titre purement illustratif, et non limitatif, en référence aux figures annexées dans lesquelles:

— la figure 1 représente un schéma de principe d'un premier mode de réalisation du capteur de déplacement linéaire conforme à l'invention;

— la figure 2 est une vue schématique, en coupe longitudinale, d'une disposition d'un capteur cornforme à l'invention;

— la figure 3 représente un schéma détaillé du capteur de la figure 2;

— la figure 4 représente un schéma détaillé du capteur selon une autre disposition;

— la figure 5 représente, sous forme de diagramme, les tensions issues d'un capteur, conforme au premier mode de réalisation, en fonction du déplacement;

— la figure 6 représente un schéma de principe d'un second mode de réalisation du capteur de déplacement linéaire conforme à l'invention;

— la figure 7 représente, sous forme de diagramme, les tensions issues d'un capteur, conforme au second mode de réalisation, en fonction du déplacement.

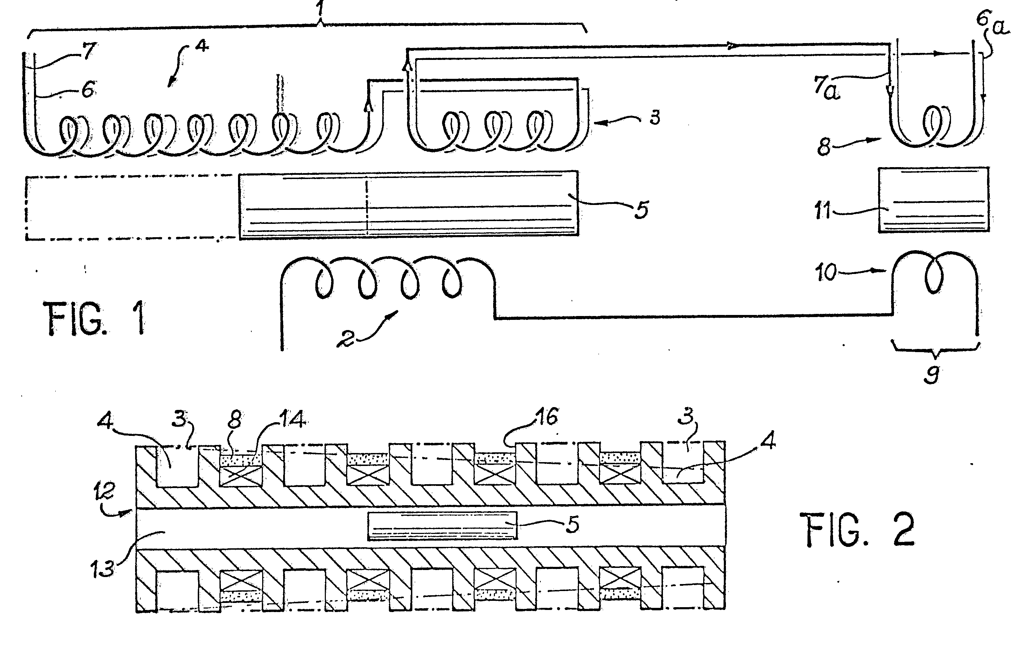

La figure 1 représente le schéma de principe d'un capteur selon l'invention. Ce capteur à transformateur différentiel 1, comprend un enroulement primaire 2, et deux enroulements secondaires 3 et 4 reliés en opposition; un noyau de couplage 5 se déplace entre le primaire 2 et les secondaires 3 et 4. Pour permettre de s'affranchir du zéro central, l'enroulement 4 comprend un nombre de spires supérieur à l'enroulement 3, de manière à déplacer le zéro vers une extrémité de la plage d'utilisation.

Sur la figure 1, on a représenté en pointillé le déplacement optimal du noyau de couplage 5.

Les enroulements secondaires 3 et 4 comprennent deux fils 6 et 7 bobinés simultanément. Les enroulements 3 et 4 sont reliés en série par les fils 6 et 7 à un troisième enroulement 8 comprenant deux fils 6a et 7a bobinés simultanément. Ce troisième enroulement 8 constitue le secondaire d'un transformateur additionnel 9 dont le primaire 10 est relié en série au primaire 2 du transformateur différentiel 1. La référence 11 représente un noyau éventuel de couplage entre le primaire 10 et le secondaire 8 du transformateur additionnel 9.

Dans la description des schémas des figures 2, 3 et 4 les deux fils électriques constituant les différents enroulements secondaires ne seront pas représentés de façon à faciliter la compréhension de ceux-ci.

La figure 2 représente une vue en coupe de l'ensemble du capteur selon une première disposition. Le capteur de déplacement linéaire est constitué d'un support 12 comportant une partie creuse 13 dans laquelle se déplace le noyau de couplage 5. Ce support 12 comprend des encoches 16 disposées régulièrement le long du support. Dans une encoche 16 sur deux, se trouve l'enroulement primaire du transformateur additionnel, confondu avec celui du transformateur différentiel, de façon à ne constituer qu'un seul enroulement primaire 14. Le secondaire 8 du transformateur additionnel est réparti tout le long du capteur. Dans l'exemple représenté, ce secondaire 8 est bobiné dans les mêmes encoches 16 que celles occupées par le primaire 14. Dans les encoches 16 restantes, on place les deux enroulements secondaires 3 et 4 du transformateur différentiel, qui sont bobinés »en sifflet« de sorte que lorsque la proportion de l'enroulement du secondaire 3 croît, celle du secondaire 4 décroît et vice versa. Cependant, si l'on veut éliminer, entre l'enroulement 8 et le primaire 14 un couplage capacitif qui entraînerait un déphasage, on peut tout aussi bien bobiner l'enroulement secondaire additionnel 8 dans les encoches 16 occupées déjà par les enroulements secondaires 3 et 4. On peut aussi envisager une combinaison des deux dispositions.

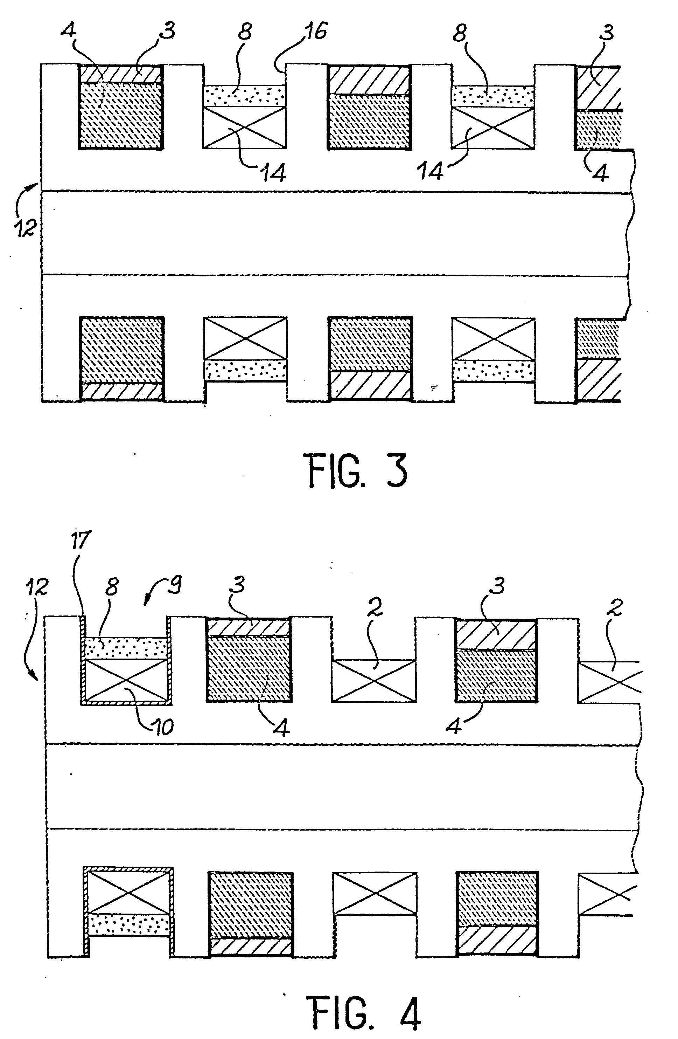

La figure 3 représente de manière plus détaillée, les enroulements de la figure 2; elle permet de mieux distinguer l'emplacement occupé par les enroulements secondaires 3 et 4 et leur disposition dans les encoches 16. Ces enroulements 3 et 4 occupent une encoche 16 sur deux. Dans les autres encoches sont placés l'unique primaire 14 et l'enroulement secondaire 8 du transformateur différentiel. Les deux enroulements gardent une dimension constante tout le long du capteur.

La figure 4 représente un schéma détaillé du capteur selon une deuxième disposition. Dans cette disposition, le transformateur additionnel 9 est placé à l'une des extrémités du capteur dans une des encoches 16 pratiquée dans le support 12. Ce transformateur additionnel est isolé électromagnétiquement du transformateur différentiel à l'aide d'un blindage 17. Ce transformateur 9 est constitué d'un primaire 10 et d'un secondaire 8 constamment couplés l'un à l'autre. Le primaire 2 du transformateur différentiel est disposé dans les autres encoches 16, en alternance avec les secondaires 3 et 4, de ce même transformateur. Ces deux secondaires 3 et 4 sont bobinés en »sifflet« comme précédemment.

Les enroulements 10 et 8 du transformateur additionnel peuvent éventuellement se présenter sous la forme d'un bobinage torique. Dans ce cas, l'encoche extrême reste ouverte en bout de manière à permettre la mise en place de ce bobinage.

Dans une variante, le transformateur additionnel 9 pourrait être entièrement indépendante du transformateur différentiel 1.

On va maintenant, décrire le fonctionnement de ce capteur de déplacement linéaire.

Dans les deux dispositions ci-dessus du capteur selon l'invention, le déplacement du noyau de couplage ne provoque aucune modification de la tension aux bornes du secondaire du transformateur additionnel, du fait que le primaire et le secondaire de ce dernier sont constamment en interaction. Par contre, du fait de la position du primaire et des secondaires du transformateur différentiel, le couplage varie suivant la position du noyau. De plus, du fait de la disposition en escalier de ces deux enroulements, le nombre de spires des deux secondaires, en interaction avec le primaire, varie en fonction du déplacement du noyau. Dans ces conditions, la tension recueillie aux bornes des enroulements secondaires du transformateur différentiel est directement proportionnelle au déplacement du noyau. En effet, l'amplitude de la tension V recueillie aux bornes des secondaires du transformateur différentiel sans transformateur additionnel croît linéairement, depuis une amplitude nulle jusqu'à une amplitude maximale dépendant du nombre de spires des différents enroulements. Le noyau de couplage est relié à l'aide d'une tige non magnétique (non représentée) pouvant se déplacer suivant l'axe du support, à différents éléments dont le déplacement est à mesurer.

Du fait que l'un des fils du secondaire du transformateur additionnel est relié en série à un des fils des secondaires du transformateur différentiel, de façon à ajouter une tension connue aux bornes des secondaires du transformateur différentiel, et que l'autre fil du secondaire du transformateur additionnel est relié en série et en opposition à l'autre fil des secondaires du transformateur différentiel, de façon à retrancher une tension constante aux bornes des secondaires du transformateur différentiel, on recueille à la sortie du capteur deux tensions différentes d'amplitude $V_1$ et $V_2$.

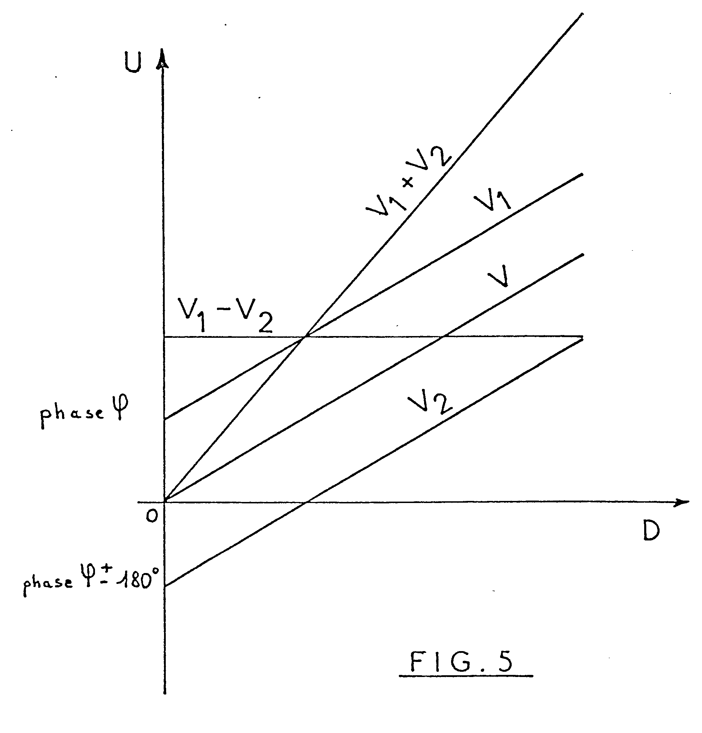

La figure 5 représente, sous forme de diagramme, les tensions issues d'un capteur conforme au premier mode de réalisation en fonction du déplacement D. La droite V représente les tensions identiques issues des bobinages 3 et 4, sans transformateur additionnel. Les droites $V_1$ et $V_2$ représent les tensions aux bornes des secondaires en présence du transformateur, respectivement dans le cas où les fils 7 et 7a sont connectés en phase et dans le cas où les fils 6 et 6a sont connectés en opposition de phase.

La différence des tensions $V_1 - V_2$ est une constante représentée par une droite parallèle à l'axe des déplacements D.

La somme des tensions $V_1 + V_2$ est représentée par une droite de pente double des droites parallèles qui représentent respectivement $V_1$ et $V_2$.

L'utilisation de la différence $V_1 - V_2$ permet de surveiller l'intégrité du capteur et l'utilisation du rapport

$$\frac{V_1 + V_2}{V_1 - V_2}$$

permet d'obtenir une fonction du déplacement indépendante de la tension primaire et des variations de température.

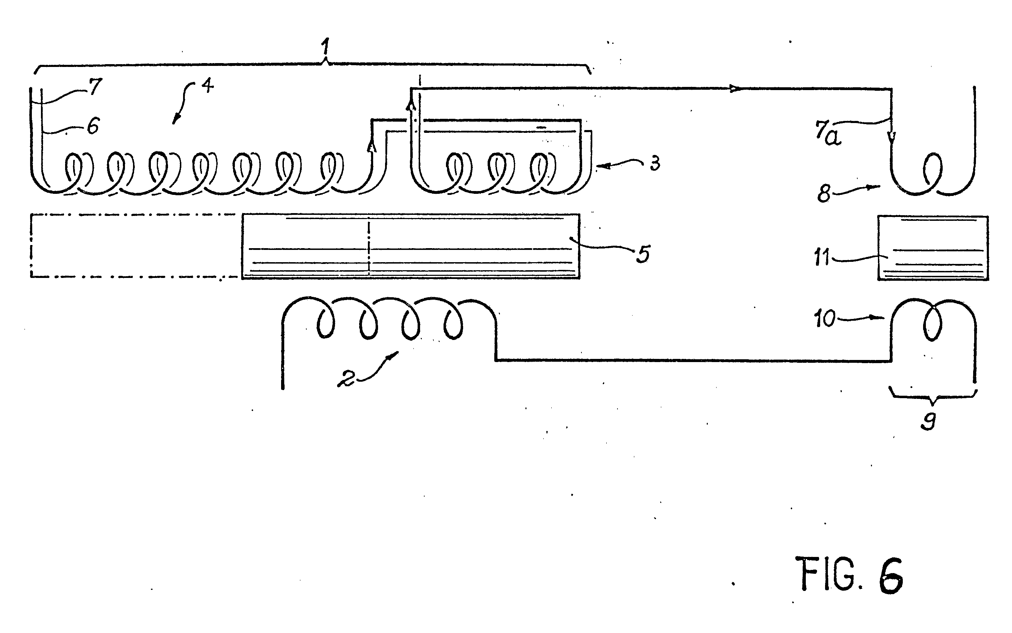

Suivant le second mode de réalisation d'un capteur selon l'invention, dont le schéma de principe est donné à la figure 6, l'enroulement secondaire 8 du transformateur additionnel 9 ne comporte plus qu'un seul fil 7a relié en série avec le fil 7 des enroulements secondaires 3 et 4 du transformateur différentiel 1. Mais, dans ce mode de réalisation, la tension obtenue aux bornes du secondaire 8 du transformateur additionnel 9 a une amplitude double de celle obtenue précédemment avec chacun des bobinages du secondaire de ce transformateur additionnel.

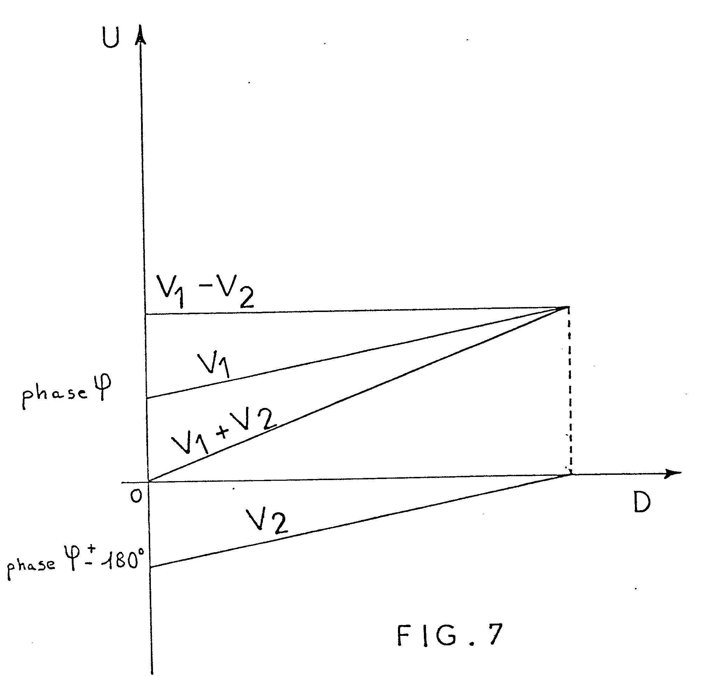

La figure 7 représente, sous forme de diagrammes, les tensions issues d'un capteur conforme au second mode de réalisation. La droite $V_2$ représente la tension issue du fil 7 en phase avec 7a. Comme on le voit sur ce diagramme, la seule différence avec le premier mode de réalisation consiste à décaler les tensions $V_1$ et $V_2$ non plus en ajoutant à une tension V deux tensions de décalage égales en oppositon de phase mais en choisissant directement $V_2$ symétrique de V et en lui ajoutant, pour obtenir $V_1$, une tension de décalage double de la précédente et égale, par conséquent, au double de la tension maximale de $V_2$.

Dans ce second mode de réalisation, il est possible de lever l'incertitude dans la mesure de $V_1 - V_2$ qui pouvait se produire avec le premier mode de réalisation au passage de $V_2$ par zéro.

De tels capteurs associés des vérins permettent de contrôler la position d'organes divers tels que par exemple, en aéronautique, des volets de tuyères de turboréacteurs, des aérofreins et de tout autre gouverne.

**Revendications**

1. Capteur de déplacement linéaire à transformateur différentiel (1), comprenant, dans des encoches (16) réparties le long d'un support (12) du capteur, un enroulement primaire (2) et deux enroulements secondaires (3, 4) ayant un nombre de spires différent, bobinés en sifflet, reliés en série et en opposition et couplés électromagnétiquement avec l'enroulement primaire (2), un noyau de couplage (5) se déplaçant entre les enroulements primaire (2) et secondaire (3, 4) de façon à faire varier les tensions aux bornes des enroulements secondaires du transformateur, caractérisé en ce que, dans le but de s'affranchir de toute fluctuation de tension primaire, chaque enroulement secondaire (3, 4) est constitué de deux bobinages réalisés au moyen de deux fils (6, 7) bobinés simultanément, l'un au moins de ces deux bobinages étant relié en série à un troisième enroulement (8) constituant le secondaire d'un transformateur additionnel (9) dont le primaire (10) estrelié en série au primaire (2) du transformateur différentiel (1).

2. Capteur selon la revendication 1, caractérisé en ce que les deux bobinages sont teliés en série au troisième enroulement (8) qui comporte lui-même deux bobinages constitués de deux fils (6a, 7a) bobinés simultanément.

3. Capteur selon la revendication 2, caractérisé en ce que l'un des bobinages de l'enroulement secondaire du transformateur additionnel (9) est relié en phase à l'un des fils (7) du secondaire (8) du transformateur différentiel (1), et en ce que l'autre bobinage de l'enroulement secondaire du transformateur additionnel (9) est relié en opposition de phase à l'autre fil (6) du secondaire (8) du transformateur différentiel (1).

4. Capteur selon la revendication 3, caractérisé en ce que la tension ajoutée aux bornes d'un des bobinages des secondaires du transformateur différentiel (1) est égale à celle retranchée aux bornes de l'autre bobinage des secondaires du transformateur différentiel (1).

5. Capteur selon la revendication 3, caractérisé en ce que la tension ajoutée aux bornes d'un des bobinages des secondaires du transformateur différentiel (1) est différente de celle retranchée aux bornes de l'autre bobinage des secondaires du transformateur différentiel (1).

6. Capteur selon la revendication 1 dans lequel un seul des deux bobinages des enroulements secondaires du transformateur différentiel (1) est relié en série avec le secondaire (8) du transformateur additionnel (9) caractérisé en ce que la tension ajoutée à ce bobinage par le secondaire du transformateur additionnel (9) est égale au double de la tension maximale aux bornes de l'autre bobinage des enroulements secondaires du transformateur différentiel (1).

7. Capteur selon l'une quelconque des revendications 1 à 6, caractérisé en ce que l'enroulement primaire (10) du transformateur additionnel (9) est confondu avec celui (2) du transformateur différentiel (1) et l'enroulement secondaire (8) du transformateur additionnel est réparti le long de capteur.

8. Capteur selon la revendication 7, caractérisé en ce que l'enroulement secondaire (8) du transformateur additionnel (9) est bobiné dans les mêmes encoches que l'enroulement primaire (10).

9. Capteur selon la revendication 7, caractérisé en ce que l'enroulement secondaire (8) du transformateur additionnel (9) est bobiné dans les mêmes encoches que les enroulements secondaires (3, 4) du transformateur différentiel (1).

10. Capteur selon l'une quelconque des revendications 1 à 6, caractérisé en ce que le transformateur additionnel (9) est placé à l'une des extrémités du capteur.

11. Capteur selon l'une quelconque des revendications 1 à 6, caractérisé en ce que le transformateur additionnel (9) est entièrement indépendant du transformateur différentiel (1).


**Patentansprüche**

1. Linearer Stellungsgeber mit Differentialtransformator, bestehend aus einem Träger (12) des Stellungsgebers mit über die Länge des Trägers verteilten Rechtecknuten (16), die eine Primärwicklung (2) aufnehmen sowie zwei Sekundärwicklungen (3, 4) von unterschiedlicher Windungszahl, die schräg verlaufend gewickelt, in Reihe und gegeneinander geschaltet und elektromagnetisch mit der Primärwicklung (2) gekoppelt sind, wobei ein Kopplungskern (5) sich zwischen der Primärwicklung (2) und den Sekundärwicklungen (3, 4) in der Weise verlagert, daß die Spannungen an den Anschlüssen der Sekundärwicklungen des Transformators variiert werden, dadurch gekennzeichnet, daß jede Sekundärwicklung (3, 4) zu dem Zweck, jede Abhängigkeit der Sekundärspannung von Schwankungen der Primärspannung zu beseitigen, aus zwei Bewicklungen besteht, die aus zwei gleichzeitig abgewickelten Drähten (6, 7) entstanden sind, und daß mindestens eine dieser beiden Bewicklungen in Reihe mit einer dritten Wicklung (8) geschaltet ist, die die Sekundärseite eines Zusatztransformators (9) bildet, dessen Primärseite (10) in Reihe mit der Primärseite (2) des Differentialtransformators (1) liegt.

2. Stellungsgeber nach Anspruch 1, dadurch gekennzeichnet, daß die beiden Bewicklungen in Reihe mit der dritten Wicklung (8) liegen, die ihrerseits zwei Bewicklungen aus zwei gleichzeitig gewickelten Drähten (6a, 7a) aufweist.

3. Stellungsgeber nach Anspruch 2, dadurch gekennzeichnet, daß die eine Bewicklung der Sekundärwicklung des Zusatztransformators (9) mit dem einen Draht (7) der Sekundärwicklungen (3, 4) des Differentialtransformators (1) phasengleich verbunden ist, und daß die andere Bewicklung der Sekundärwicklung des Zusatztransformators (9) gegenphasig mit dem anderen Draht (6) der Sekundärwicklungen (3, 4) des Differentialtransformators (1) verbunden ist.

4. Stellungsgeber nach Anspruch 3, dadurch gekennzeichnet, daß die an den Anschlüssen der einen Bewicklung der Sekundärwicklungen des Differentialtransformators (1) zugefügte Spannungen ebenso groß ist wie die an den Anschlüssen der anderen Bewicklung der Sekundärwicklungen des Differentialtransformators (1) abgezogene Spannung.

5. Stellungsgeber nach Anspruch 3, dadurch gekennzeichnet, daß die an den Anschlüssen der einen Bewicklung der Sekundärwicklungen des Differentialtransformators (1) zugefügte Spannung verschieden ist von der an den Anschlüssen der anderen Bewicklung der Sekundärwicklungen des Differentialtransformators (1) abgezogenen Spannung.

6. Stellungsgeber nach Anspruch 1, bei dem nur eine der beiden Bewicklungen der Sekundärwicklungen des Differentialstransformators (1) in Reihe mit der Sekundärwicklung (8) des Zusatztransformators (9) geschaltet ist, dadurch gekennzeichnet, daß die dieser Bewicklung durch die Sekundärwicklung des Zusatztransformators (9) zugefügte Spannung gleich dem doppelten Betrag der Maximalspannung an den Anschlüssen der anderen Bewicklung der Sekundärwicklungen des Differentialtransformators (1) ist.

7. Stellungsgeber nach einem der Ansprüche 1 bis 4, dadurch gekennzeichnet, daß die Primärwicklung (10) des Zusatztransformators (9) mit der Primärwicklung (2) des Differentialtransformators (1) zusammengewickelt ist und daß die Sekundärwicklung (8) des Zusatztransformators über die Länge des Stellungsgebers verteilt ist.

8. Stellungsgeber nach Anspruch 7, dadurch gekennzeichnet, daß die Sekundärwicklung (8) des Zusatztransformators (9) in die gleichen Rechtecknuten gewickelt ist wie die Primärwicklung (10).

9. Stellungsgeber nach Anspruch 7, dadurch gekennzeichnet, daß die Sekundärwicklung (8) des Zusatztransformators (9) in die gleichen Rechtecknuten gewickelt ist wie die Sekundärwicklungen (3, 4) des Differentialtransformators (1).

10. Stellungsgeber nach einem der Ansprüche 1 bis 6, dadurch gekennzeichnet, daß der Zusatztransformator (9) an dem einen Ende des Stellungsgebers angeordnet ist.

11. Stellungsgeber nach einem der Ansprüche 1 bis 6, dadurch gekennzeichnet, daß der Zusatztransformator (9) von dem Differentialtransformator (1) völlig unabhängig ist.

## Claims

1. Linear displacement transducer with a differential transformer (1) comprising, within notches (16) distributed along a support (12) of the transducer, a primary winding (2) and two secondary windings (3, 4) having a different number of turns, wound in »tapered manner«, connected in series and in opposition and electromagnetically coupled with the primary winding (2), a coupling core (5) moving between the primary (2) and secondary windings (3, 4) in such a manner as to cause variation in the voltages at the terminals of the secondary windings of the transformer, characterised in that with the aim of eliminating all fluctuations in the primary voltage, each secondary winding (3, 4) is constituted by two coils produced by means of two wires (6, 7) wound together at least one of these two coils being connected in series with a third winding (8) constituting the secondary of an additional transformer (9) of which the primary (10) is connected in series with the primary (2) of the differential transformer (1).

2. A transducer according to claim 1, characterised in that the two coils are connected in series to the third winding (8) which itself comprises two coils constituted by two wires (6a, 7a) which are wound simultaneously.

3. A transducer according to claim 2, characterised in that one of the coils of the secondary winding of the additional transformer (9) is connected in phase to one of the wires (7) of the secondary (8) of the differential transformer (1), and in that the other coil of the secondary winding of the additional transformer (9) is connected in phase opposition to the other wire (6) of the secondary (8) of the differential transformer (1).

4. A transducer according to claim 3, characterised in that the voltage added to the terminals of one of the coils of the secondary of the differential transformer (1) is equal to that subtracted from the terminals of the other coil of the secondary of the differential transformer (1).

5. A transducer according to claim 3, characterised in that the voltage added to the terminals of one of the secondary coils of the differential transformer (1) is different from that subtracted from the terminals of the other coil of the secondary of the differential transformer (1).

6. A transducer according to claim 1, in which only one of the two coils of the secondary winding of the differential transformer (1) is connected in series with the secondary (8) of the additional transformer (9) characterised in that the voltage added to this coil by the secondary of the additional transformer (9) is equal to twice the maximum voltage at the terminals of the other coil of the secondary windings of the differential transformer (1).

7. A transducer according to any one of claim 1 to 6, characterised in this that the primary winding (10), of the additional transformer (9) is combined with that (2) of the differential transformer (1) and the secondary winding (8) of the additional transformer is distributed along the transducer.

8. A transducer according to claim 7, characterised in that the secondary winding (8) of the additional transformer (9) is wound in the same notches as the primary winding (10).

9. A transducer according to claim 7, characterised in that the secondary winding (8) of the additional transformer (9) is wound in the same notches as the secondary windings (3, 4) of the differential transformer (1).

10. A transducer according to any one of claims 1 to 6, characterised in that the additional transformer (9) is disposed at one of the ends of the transducer.

11. A transducer according to any one of claims 1 to 6, characterised in that the additional transformer (9) is entirely independent of the differential transformer (1).

FIG. 1

FIG. 2

0 028 971

FIG. 3

FIG. 4

FIG. 5

FIG. 6

FIG . 7